(19) **Europäisches Patentamt**

**European Patent Office**

**Office européen des brevets**

(11) **EP 0 567 900 B1**

(12) **EUROPÄISCHE PATENTSCHRIFT**

(45) Veröffentlichungstag und Bekanntmachung des Hinweises auf die Patenterteilung:
**05.02.1997 Patentblatt 1997/06**

(51) Int. Cl.$^6$: **B60R 21/32**

(21) Anmeldenummer: **93106402.6**

(22) Anmeldetag: **20.04.1993**

(54) **Auslöseverfahren für ein Rückhaltesystem**

Releasing method for a restraint system

Procédé de déclenchement pour un système de retenue

(84) Benannte Vertragsstaaten:
**FR GB IT**

(30) Priorität: **25.04.1992 DE 4213673**

(43) Veröffentlichungstag der Anmeldung:
**03.11.1993 Patentblatt 1993/44**

(73) Patentinhaber: **TEMIC TELEFUNKEN microelectronic GmbH**
**74072 Heilbronn (DE)**

(72) Erfinder:
- **Schulter, Wolfgang, Dipl.-Ing.**
  **W-7758 Meersburg (DE)**
- **Schuler, Rolf, Dipl.-Ing.**
  **W-7991 Oberteuringen (DE)**

(56) Entgegenhaltungen:
DE-A- 3 729 019          DE-A- 4 034 974
DE-A- 4 110 891          DE-A- 4 110 892
US-A- 4 842 301          US-A- 5 073 860

**Beschreibung**

Die Erfindung betrifft ein verfahren zur Auslösung eines Rückhaltesystems zum Schutz von Insassen in einem Fahrzeug, wie es aus der DE 41 10 892 A1 bekannt ist. Unter Rückhaltesystemen werden dabei insbesondere Air-Bag-Systeme und Gurtstraffer für Sicherheitsgurte verstanden.

Auslöseverfahren für Rückhaltesysteme verwenden in der Regel die Ausgangssignale mehrerer, fest mit der Fahrzeugstruktur (Trägerstruktur) verbundenen Beschleunigungssensoren zur Messung der Fahrtrichtungskomponente der Beschleunigung sowie von Querbeschleunigungskomponenten. Darüber hinaus werden auch die Ausgangssignale von Geschwindigkeitssensoren ausgewertet.

Die Auslösekriterien bei den bekannten verfahren sind überwiegend im Zeitbereich formuliert, d.h. die gemessenen Werte für Beschleunigung und Geschwindigkeit gehen direkt in die Berechnung des Auslösezeitpunkts ein (z.B. Vergleich mit einem vorgegebenen Schwellwert).

Beim gattungsgemäßen verfahren der DE 41 10 892 A1 werden fortlaufend Kurzzeit-Spektral-Analysen des Beschleunigungssignals von mindestens einer Beschleunigungskomponente der Trägerstruktur (Fahrzeugstruktur) durchgeführt. Unter Kurzzeit-Spektral-Analysen ist dabei zu verstehen, daß jeweils der innerhalb kleiner Zeitsegmente gemessene Beschleunigungsverlauf einer Spektral-Analyse unterzogen wird, wobei die Dauer der Zeitsegmente sehr kurz ist im Vergleich zu der zu erwartenden Dauer der Gesamtverzögerung. Aus mehreren Spektralkomponenten werden charakteristische Parameter als sogenannte Auslöseparameter berechnet, die für die verformung der Trägerstruktur charakteristisch sind; diese Auslöseparameter werden mit vorgegebenen Schwellenwerten zur Definition von Auslösekriterien verglichen. Dieser Vergleich liefert eine Entscheidung über die Auslösung des Rückhaltesystems.

Der Erfindung liegt die Aufgabe zugrunde, ein einfaches, aussagekräftiges Auslöseverfahren mit hoher Auslösesicherheit unter Verarbeitung möglichst weniger Eingangssignale zu schaffen.

Diese Aufgabe wird mit dem Verfahren des Patentanspruchs 1 gelöst. Ausgestaltungen der Erfindung sind Gegenstand weiterer Patentansprüche.

Beim angemeldeten Verfahren werden die Auslöseparameter und demzufolge auch die Auslösekriterien für die Beurteilung der Auslösung des Rückhaltesystems durch Bildung des Verhältnisses der Spektralkomponenten der Haupt-Schwingungsmoden zu den Spektralkomponenten der Neben-Schwingungsmoden ermittelt; hierdurch kann ein einfaches und aussagekräftiges Kriterium für die Auslösung des Rückhaltesystems gewonnen werden, d.h. auf der Basis der erhaltenen Spektren der Kurzzeit-Spektral-Analyse können Auslösekriterien formuliert werden, die nur von einzelnen Spektralkomponenten abhängig sind.

Eine Vorrichtung zur Durchführung des erfindungsgemäßen Verfahrens umfaßt einen fest mit der Trägerstruktur verbundenen Beschleunigungssensor und eine Vorrichtung zur analogen Vorverarbeitung des Beschleunigungssignals. Durch analoge oder digitale Bandfilter werden die Spektralkomponenten des Beschleunigungssignals ausgewertet. In einem Rechenwerk erfolgt die Berechnung des Auslöseparameters aus den Spektralkomponenten und der Vergleich mit dem Schwellenwert.

Das erfindungsgemäße Verfahren sowie die Vorrichtung zur Durchführung des Verfahrens werden nun ausführlich anhand der Fig. 1 bis 3 erläutert.

Es zeigen:

Fig. 1     ein typisches Beschleunigungssignal, das als Eingangssignal für das erfindungsgemäße Verfahren dient,

Fig. 2     das Frequenz-Spektrum des Beschleunigungssignals innerhalb eines einzelnen Zeitsegments (Kurzzeitspektrum),

Fig. 3     eine Vorrichtung zur Durchführung des Verfahrens.

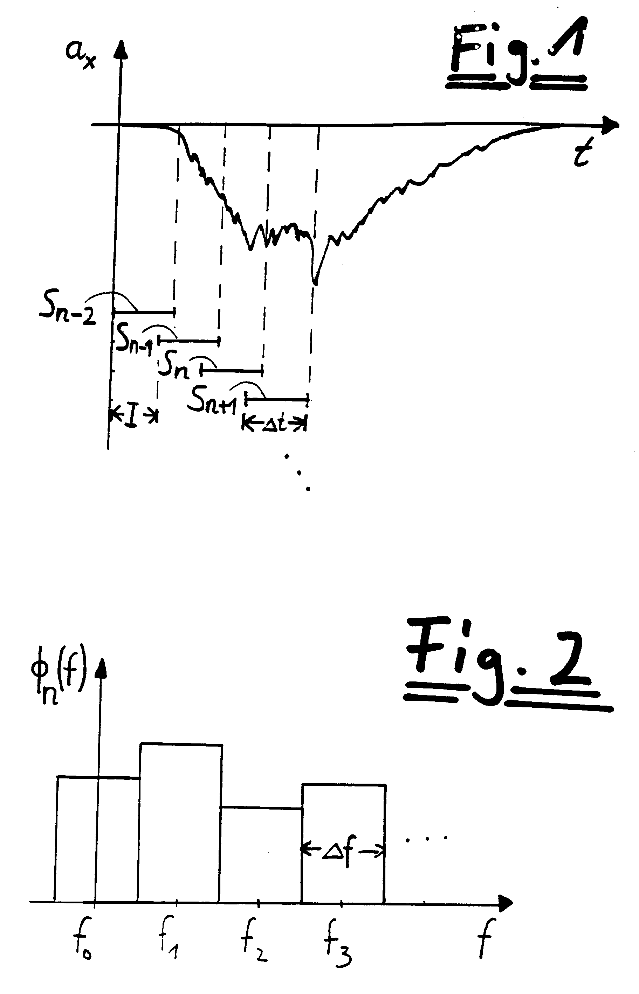

Fig. 1 zeigt den zeitlichen Verlauf der Fahrtrichtungskomponente $a_x(t)$ eines Beschleunigungssignals, der für das Crash-Verhalten eines bestimmten Fahrzeugtyps charakteristisch ist, und an dem das erfindungsgemäße Verfahren im folgenden erläutert wird. Da es sich um Verzögerungen handelt, ist die Beschleunigung mit negativem Vorzeichen behaftet.

Erfindungsgemäß wird das Beschleunigungssignal fortlaufend in einzelnezeitliche Segmente $S_n$ (im weiteren auch als Frame bezeichnet) mit n = -∞ bis +∞ der Länge $\Delta t$ zerlegt. Bevorzugt wird die Segmentierung in einzelne Frames so gewählt, daß nachfolgende Frames sich überlappen. Die Zeit-Differenz zwischen den Anfangspunkten zweier aufeinanderfolgender Frames wird als Intervallänge I bezeichnet. Die Framelänge $\Delta t$ muß wesentlich kleiner als die Gesamtdauer des Verzögerungsvorgangs sein. Sie muß nicht notwendigerweise für alle Frames $S_n$ konstant sein.

Die Segmentierung erfolgt bevorzugt durch Anwendung einer geeigneten Fensterfunktion auf das Beschleunigungssignal.

Jedes einzelne der Segmente $S_n$ wird einer Spektral-Analyse (Kurzzeitspektralanalyse) unterzogen, z.B. nach den bekannten Methoden der Fast-Fourier-Transformation (FFT) oder durch Anwendung einer digitalen oder analogen Filterbank.

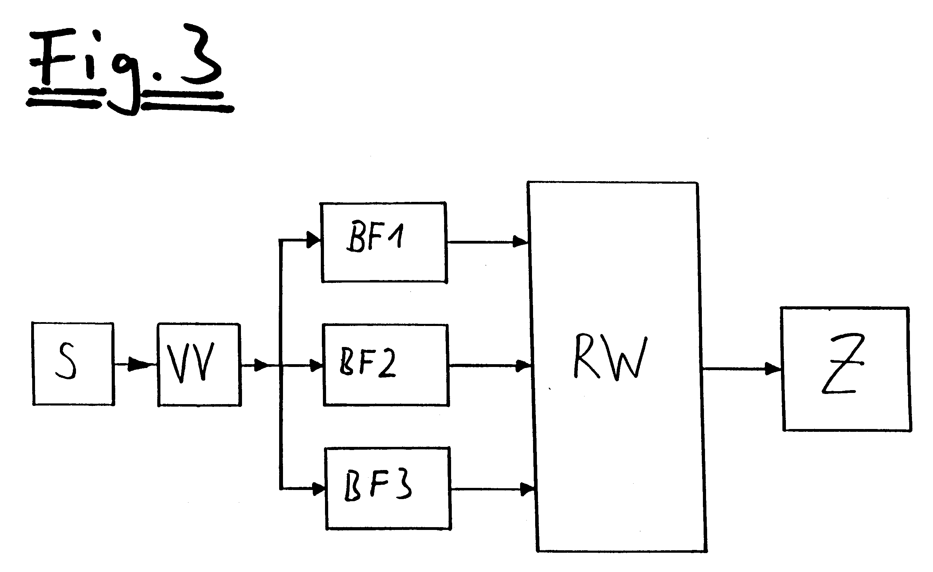

Fig. 2 zeigt das Frequenzspektrum $\Phi_n(f)$ (Kurzzeitspektrum) als Ergebnis der Spektralanalyse des n-ten Segments $S_n$ des Beschleunigungssignals $a_x(t)$.

Die Größe $\Phi_n(f_i)$ kann als Beschleunigungsintensität um die Frequenz $f_i$ bezogen auf die Bandbreite $\Delta f$ gedeutet werden. Sie besitzt die Dimension m/s oder auch $m/s^2$ / Hz. Die Größe $\Phi_n(f_o)$ wird als Gleichanteil des Beschleunigungssignals bezeichnet (vergleichbar dem ersten Glied einer Fourierreihe). Sie kann als Geschwindigkeits-Änderung innerhalb des betrachteten Frames gedeutet werden.

Die Bandbreite $\Delta f$ der einzelnen Frequenzanteile wird durch die Wahl der Framelänge $\Delta t$ und der Form der Fensterfunktion bestimmt.

Aus diesen Spektren kann ein Auslösekriterium formuliert werden, das auf wenigen Spektralkomponenten basiert und im engen Zusammenhang mit einer Trägerstrukturverformung des kollidierenden Fahrzeugs steht, und damit als hinreichende Bedingung für die Auslösung eines Rückhaltesystems dienen kann. Dies wird an einigen Beispielen im folgenden näher erläutert.

Es wurde gefunden, daß das Verhältnis der Spektralkomponenten $\Phi_n(f_x)$, $\Phi_n(f_y)$ der Haupt- und Neben-Schwingungsmoden $f_x$, $f_y$ der Fahrzeugstruktur als Auslösekriterium verwendet werden kann. Die Frequenzen $f_x$, $f_y$ werden vorab für den betreffenden Fahrzugtyp aus Crash-Versuchs-Datenbanken unter Verwendung z.B. einer Autokorrelationsmethode (AKF) ermittelt. Eine Auslösung soll immer dann erfolgen, wenn $\Phi_n(f_y)$ von der Größenordnung von $\Phi_n(f_x)$ oder großer als $\Phi_n(f_x)$ ist. Auf aufeinanderfolgenden Kurzzeit-Spektralanalysen $n = -\infty$ bis $+\infty$ werden dazu ständig die Spektralwerte $\Phi_n(f_x)$ und $\Phi_n(f_y)$ sowie deren Quotient C (Auslöseparameter) ermittelt und mit einer vorgegebenen Triggerschwelle trig verglichen:

$$C = \Phi_n(f_y)/\Phi_n(f_x) > \text{trig.}$$

Beim Überscheiten der Triggerschwelle trig wird das Rückhaltesystem ausgelöst.

Um die Auslösegenauigkeit zu erhöhen, können in die Berechnung des Auslöseparameters C weitere Spektralkomponenten einbezogen werden. Ein Beispiel dafür ist das Auslösekriterium

$$C = \Phi_n(f_o) * \Phi_n(f_y)/\Phi_n(f_x) > \text{trig.}$$

Hier wird der Quotient $\Phi_n(f_y)/\Phi_n(f_x)$ zusätzlich mit dem Gleichanteil $\Phi_n(f_o)$ gewichtet.

Möglich ist auch die Einbeziehung von Spektralkomponenten aus aufeinanderfolgenden Frames $\Phi_n$, $\Phi_{n-1}$, $\Phi_{n-2}$,...

Besonders vorteilhaft an dem erfindungsgemäßen Verfahren ist, daß durch Auswertung nur einer Eingangsgröße (in den obigen Beispielen die Fahrtrichtungskomponente der Beschleunigung) eine sichere Auslösung erreicht werden kann.

Fig. 3 zeigt das Blockdiagramm einer Vorrichtung zur Durchführung des Verfahrens. Sie umfaßt einen Beschleunigungssensor S, dessen Ausgangssignale in der Vorrichtung VV zur analogen Vorverarbeitung gefiltert und analog-digital gewandelt werden. Mit analogen oder digitalen Bandfiltern BF1, BF2, BF3 werden die Spektralkomponenten ausgewertet, wobei für jede Komponente ein Bandfilter vorgesehen ist. Für die Auswertung des Gleichanteils des Beschleunigungssignals eignet sich insbesondere ein Moving-Average-Filter, für die Auswertung der anderen Spektralkomponenten werden z.B IIR-Bandfilter (Infinite Impulse Response) verwendet. In einem Rechenwerk RW werden aus den Spektralkomponenten die Auslöseparameter berechnet und der Vergleich mit den Schwellenwerten durchgeführt. Das Rechenwerk RW kann auch Algorithmen für die Realisierung der digitalen Bandfilter enthalten. Bei Überschreitung der Schwellenwerte wird das Rückhaltesystem ausgelöst, wobei im Falle eines Air-Bag-Systems die Zündeinrichtung Z aktiviert wird.

## Patentansprüche

1. Verfahren zur Auslösung eines Rückhaltesystems zum Schutz von Insassen in einem Fahrzeug, mit den Verfahrensschritten:

   - Durchführung fortlaufender Kurzzeit-Spektral-Analysen des Beschleunigungssignals von mindestens einer Beschleunigungskomponente der Fahrzeugstruktur,

   - Ermittlung mindestens eines für die Verformung der Fahrzeugstruktur charakteristischen Parameters als Auslöseparameter aus mehreren Spektralkomponenten,

   - Definition eines Auslösekriteriums durch Vergleich der ermittelten Auslöseparameter mit mindestens einem vorgegebenen Schwellenwert,

   - Auslösung des Rückhaltesystems, wenn anhand des Auslösekriteriums auf eine Kollision des Fahrzeugs geschlossen werden kann,

   dadurch gekennzeichnet:

   - die Auslöseparameter werden durch Bildung des Verhältnisses der Spektralkomponenten der Haupt- und Neben-Schwingungsmoden der Fahrzeugstruktur ermittelt, so daß für die Definition des Auslösekriteriums das Verhältnis der Haupt- und Neben-Schwingungsmoden der Fahrzeugstruktur verwendet wird.

2. Verfahren nach Anspruch 1, dadurch gekennzeichnet, daß der Gleichanteil des Beschleunigungssignals in die Ermittlung des Auslöseparameters und die Definition des Auslösekriteriums eingeht.

3. Verfahren nach Anspruch 1 oder 2, dadurch gekennzeichnet, daß das Auslösekriterium folgendermaßen definiert wird:

   $$C = \Phi_n(f_o) * \Phi_n(f_y)/\Phi_n(f_x) > \text{trig}$$

   mit

   C: Auslöseparameter

trig: Schwellenwert

$\Phi_n(f_x)$: Spektralkomponente des Hauptschwingungsmods $f_x$ der Fahrzeugstruktur

$\Phi_n(f_y)$: Spektralkomponente eines Nebenschwingungsmods $f_y$ der Fahrzeugstruktur

$\Phi_n(f_o)$: Gleichanteil des Beschleunigungssignals

n: lfd. Nr. der Kurzzeit-Spektral-Analysen

4.  Verfahren nach einem der Ansprüche 1 bis 3, dadurch gekennzeichnet, daß Spektralkomponenten aus aufeinanderfolgenden Kurzzeit-Spektral-Analysen in die Ermittlung des Auslöseparameters eingehen.

**Claims**

1.  Method of triggering a restraint system for protecting the occupants of a vehicle including the method steps:

    -   effecting continuous short term spectral analyses of the acceleration signal from at least one acceleration component of the vehicle structure,
    -   establishing from a plurality of the spectral components, at least one parameter that is characteristic of the deformation of the vehicle structure as the triggering parameter,
    -   defining a triggering criterion by comparing the triggering parameter that has been established with at least one predetermined threshold value,
    -   triggering the restraint system when a collision of the vehicle can be deduced from the triggering criterion,

    characterised in that:

    -   the triggering parameters are established by forming the ratio of the spectral components of the main and secondary oscillatory modes of the vehicle structure so that the ratio of the main and secondary oscillatory modes of the vehicle structure is used for defining the triggering criterion.

2.  Method in accordance with Claim 1, characterised in that, the dc component of the acceleration signal enters into the process for establishing the triggering parameter and the process for defining the triggering criterion.

3.  Method in accordance with Claim 1 or 2, characterised in that, the triggering criterion is defined in the following manner:

$$C = \Phi_n(f_o) * \Phi_n(f_y) / \Phi_n(f_x) > trig$$

where

| | |
|---|---|
| C: | the triggering parameter |
| trig: | the threshold value |
| $\Phi_n(f_x)$: | the spectral components of the main oscillatory mode $f_x$ of the vehicle structure |
| $\Phi_n(f_y)$: | the spectral components of a secondary oscillatory mode $f_y$ of the vehicle structure |
| $\Phi_n(f_o)$: | the dc component of the acceleration signal |
| n: | the serial number of the short term spectral analyses |

4.  Method in accordance with any of the Claims 1 to 3, characterised in that, the spectral components from successive short term spectral analyses enter into the process for establishing the triggering parameter.

**Revendications**

1.  Procédé de déclenchement d'un système de retenue en vue de la protection de passagers dans un véhicule, comportant les étapes suivantes : :

    -   exécution d'analyses spectrales instantanées en continu du signal d'accélération d'au moins une composante d'accélération de la structure du véhicule,
    -   détection d'au moins un paramètre caractéristique pour la déformation du structure du véhicule en tant que paramètre de déclenchement à partir de plusieurs composantes spectrales,
    -   définition d'un critère de déclenchement par comparaison des paramètres de déclenchement détectés à au moins une valeur de seuil prédéterminée,
    -   déclenchement du système de retenue lorsqu'à l'aide du critère de déclenchement, on peut conclure à une collision du véhicule,

    caractérisé en ce que :
    les paramètres de déclenchement sont détectés par formation du rapport des composantes spectrales des modes d'oscillation principale et auxiliaire de la structure du véhicule, de sorte que, pour la définition du critère de déclenchement, le rapport des modes d'oscillation principale et auxiliaire de la structure du véhicule est utilisé.

2.  Procédé selon la revendication 1, caractérisé en ce que la composante continue du signal d'accélération intervient dans la détection du paramètre de déclenchement et la définition du critère de déclenchement.

3.  Procédé selon la revendication 1 ou 2, caractérisé en ce que le critère de déclenchement est défini de la manière suivante :

$$C = \phi_n(f_0) * \phi_n(f_y)/\phi_n(f_x) > trig$$

avec

C : paramètre de déclenchement

trig : valeur de seuil

$\phi_n(f_x)$ : composantes spectrales du mode d'oscillation principale $f_x$ de la structure du véhicule

$\phi_n(f_y)$ : composantes spectrales d'un mode d'oscillation auxiliaire $f_y$ de la structure du véhicule

$\phi_n(f_0)$ : composante continue du signal d'accélération

n : nombre courant des analyses spectrales instantanées.

4. Procédé selon les revendications 1 à 3, caractérisé en ce que des composantes spectrales provenant d'analyses spectrales instantanées successives interviennent dans la détection du paramètre de déclenchement.

Fig. 1

Fig. 2

EP 0 567 900 B1

# Fig.3